# EUROPÄISCHE PATENTSCHRIFT

(11) **EP 4 008 454 B1**
(45) Veröffentlichungstag und Bekanntmachung des Hinweises auf die Patenterteilung: **21.02.2024**
(21) Anmeldenummer: 20210945.0
(22) Anmeldetag: 01.12.2020
(51) Int. Cl.: B22F 3/11, B22F 5/00, B33Y 80/00, G01N 3/08, B22F 10/28, B22F 10/68, B33Y 10/00

(54) **WERKSTOFFPROBE UND ZWISCHENPRODUKT SOWIE VERFAHREN ZUR HERSTELLUNG EINER/S SOLCHEN**
MATERIAL SAMPLE AND INTERMEDIATE PRODUCT AND METHOD FOR PRODUCING THE SAME
ÉCHANTILLON DE MATIÈRE ET PRODUIT INTERMÉDIAIRE AINSI QUE PROCÉDÉ DE FABRICATION DES TELS ÉCHANTILLON ET PRODUIT

(43) Veröffentlichungstag der Anmeldung: 08.06.2022
(73) Patentinhaber: Siemens Energy Global GmbH & Co. KG, 81739 München (DE)
(72) Erfinder: Albert, Johannes, 13357 Berlin (DE); Rule, David, 20537 Hamburg (DE); Wanjura, Stefan, 46147 Oberhausen (DE)

(56) Entgegenhaltungen:
- BARTOLOMEU F ET AL: "Selective Laser Melting of Ti6Al4V sub-millimetric cellular structures: Prediction of dimensional deviations and mechanical performance", JOURNAL OF THE MECHANICAL BEHAVIOR OF BIOMEDICAL MATERIALS, ELSEVIER, AMSTERDAM, NL, Bd. 113, 3. Oktober 2020 (2020-10-03), XP086387343, ISSN: 1751-6161, DOI: 10.1016/J.JMBBM.2020.104123 [gefunden am 2020-10-03]
- WANG M ET AL: "Microstructure anisotropy and its implication in mechanical properties of biomedical titanium alloy processed by electron beam melting", MATERIALS SCIENCE AND ENGINEERING: A, Bd. 743, 9. November 2018 (2018-11-09), Seiten 123-137, XP085576866, ISSN: 0921-5093, DOI: 10.1016/J.MSEA.2018.11.038
- CALLE MIGUEL A G ET AL: "Additive manufacturing of miniature marine structures for crashworthiness verification: Scaling technique and experimental tests", MARINE STRUCTURES, ELSEVIER, AMSTERDAM, NL, Bd. 72, 14. April 2020 (2020-04-14), XP086155378, ISSN: 0951-8339, DOI: 10.1016/J.MARSTRUC.2020.102764 [gefunden am 2020-04-14]

## Beschreibung

Die Erfindung betrifft eine Werkstoffprobe hergestellt mittels eines Pulverbett-Herstellungsverfahren, wobei die Werkstoffprobe an seinen beiden Enden einen Einspannabschnitt und zwischen den beiden Einspannabschnitt einen Testabschnitt mit abweichenden Materialeigenschaften aufweist.

Der Einsatz eines Pulverbett-Herstellungsverfahren zur Herstellung eines metallischen Bauteils eröffnet die Möglichkeit die Materialeigenschaften individuell zu beeinflussen. Insbesondere kann dies durch die gezielte Festlegung einer spezifischen Mikrostruktur, Porosität oder beispielsweise Gitterstruktur erreicht werden.

Wenngleich in vielen Anwendungsfällen die mechanischen Eigenschaften nicht weiter relevant sind, da die hinreichende Steifigkeit und Festigkeit für den vorgesehenen Anwendungszweck ohne weiteres ausreichend ist, so gibt es demgegenüber jedoch ebenso Anwendungsfälle, in denen die mechanischen Eigenschaften von erheblicher Bedeutung für die Verwendbarkeit des Bauteils mit den vorgesehenen Materialeigenschaften, d. h. der gezielt vorgegebenen Struktur des Materials, sind. Daher ist es von großem Interesse die Materialeigenschaften derartiger im Pulverbett-Herstellungsverfahren hergestellter Bauteile mit geeigneten Messverfahren bestimmen zu können.

Aus dem Stand der Technik ist es hierzu bekannt, einen Probenrohling im Pulverbett-Herstellungsverfahren in der Regel in der Form eines Quaders hergestellt wird. In einem nachfolgenden Bearbeitungsprozess zu einer genormten Rundprobe mit geringerem Durchmesser im mittleren Bereich und beidseitigen gewinnenden an den Enden geformt wird.

Wenngleich der so hergestellte Prüfkörper tauglich zur Bestimmung der Materialeigenschaften ist, so ist jedoch die notwendige mechanische Bearbeitung von einem erheblichen Nachteil, insbesondere wenn die Werkstoffprobe aus einer hochfesten Stahllegierung oder aus einer Keramik besteht.

Aus der Forschung von Materialien (zu finden in "Journal Of The Mechanical Behavior of Biomedical Materials" von Bartolomeu et al: "Selective Laser Melting of Ti6Al4V sub-millimetric cellular tructures: Prediction of dimensional deviations and mechanical Performance"), insbesondere Titan-Legierungen zur medizinischen Verwendung, welche mittels eines SLM ("Selective Laser Melting") Verfahren hergestellt werden und eine definierte Porosität aufweisen, sind weiterhin Probenkörper bekannt, welche einen mittleren geradlinigen Abschnitt mit der porösen Struktur und beidseitig sich daran anschließend einen Einspannabschnitt mit einer im Wesentlichen nicht porösen Struktur aufweisen.

Weiterhin ist es aus der Untersuchung der An-Isotropie und den resultierenden Eigenschaften (zu finden in "Materials Science and Engineering" von Wang et al: "Microstructure anisotropy and its implication in mechanical properties of biomedical titanium alloy processed by electron beam melting") dabei bekannt, dass bei der üblichen Probengeometrie in Abhängigkeit von der Ausrichtung bei der Herstellung eine unterschiedliche Porosität in Abhängigkeit von der Abkühlungsgeschwindigkeit an der jeweiligen Position einstellt, wobei eine schnellere Abkühlung zu einer höheren Porosität führt.

Zur Erforschung der Möglichkeiten Bauteile durch miniaturisierte Geometrien zur weiteren Erprobung abzubilden (zu finden in "Marine Structures" von Calle Miguel et al: "Additive manufacturing of miniature marine structures for crashworthiness verification: Scaling technique and experimental tests") und die an der Miniatur gewonnen Erkenntnisse auf die realen Bauteile übertragen zu können, werden gleichfalls Experimente mit Proben durchgeführt, welche in einem mittleren Abschnitt in Art einer porösen Struktur aufweisen, um dessen Materialeigenschaften bestimmen zu können.

Die bekannten Probenkörper zur Erprobung von mittels eines additiven Verfahrens hergestellter poröser Werkstoffe sind zwar tauglich, um eine in den allermeisten Fällen hinreichende Genauigkeit der Probennahme zu ermöglichen. Bei höheren Anforderungen an die Genauigkeit stellt sich jedoch mitunter das Problem einer aufwendigeren Nacharbeit. Weiterhin stellt sich die Frage, ob der Unterschied in der Porosität zwischen dem Mittelteil und den Einspannabschnitten sich nachteilig auf die Genauigkeit der Messergebnisse auswirkt.

Aufgabe für die vorliegende Erfindung ist daher ein Verfahren und eine Werkstoffprobe bereitzustellen, die sich durch eine vereinfachte Herstellung kennzeichnen und eine hohe Genauigkeit bei der Erprobung ermöglichen.

Die gestellte Aufgabe wird durch eine erfindungsgemäße Ausführung einer Werkstoffprobe nach der Lehre des Anspruchs 1 gelöst. Ein erfindungsgemäßes Zwischenprodukt zur Bildung einer entsprechenden Werkstoffprobe ist im Anspruch 10 angegeben. Zwei alternative erfindungsgemäße Verfahren zur Herstellung einer Werkstoffprobe sind in den Ansprüchen 14 und 15 angegeben. Vorteilhafte Ausführungsformen sind Gegenstand der Unteransprüche.

Die gattungsgemäße Werkstoffprobe dient zunächst einmal zur Verwendung in einer Werkstoffprüfeinrichtung. Um welche Art von Werkstoffprüfeinrichtung es sich hierbei handelt ist zunächst unerheblich. Besonders geeignet ist die Werkstoffprobe jedoch zur Verwendung in einer Zugprüfeinrichtung.

Die gattungsgemäße Werkstoffprobe weist zunächst einmal einen Testabschnitt auf, welcher sich in einer Länge erstreckt und hierbei quer zur Länge eine konstante Probenbreite und eine konstante Probenhöhe aufweist. Entsprechend dem vorgesehenen Zweck zur Bestimmung der Materialeigenschaften eines Materials mit besonderer Struktur weist der Testabschnitt eine Probendichte (d.h. das Gewicht des Testabschnitts im Verhältnis zu seinem Volumen) auf, welche in jedem Fall geringer ist als es der Materialdichte des eingesetzten Werkstoffes entspricht.

Weiterhin weist die Werkstoffprobe einen Aufweitungsabschnitt auf, welcher sich nahtlos an den Testabschnitt anschließt. Im Gegensatz zum Testabschnitt mit konstantem Querschnitt ist im Aufweitungsabschnitt vorgesehen, dass sich zumindest die Breite, ausgehend von der Probenbreite in Richtung des entsprechenden Endes der Werkstoffprobe vergrößert.

Zur Ermöglichung einer sicheren Durchführung der Erprobung der Materialeigenschaften ist weiterhin vorgesehen, dass die Werkstoffprobe an den gegenüberliegenden Enden jeweils einen Einspannabschnitt aufweist. Dabei weisen die Einspannabschnitte eine gegenüber der Probendichte vergrößerte Grundmaterialdichte auf. Diesbezüglich ist es nicht erheblich, ob die Grundmaterialdichte hierbei der Dichte des eingesetzten Werkstoffs exakt entspricht. Wesentlich ist vielmehr, dass durch die erhöhte Grundmaterialdichte gegenüber der Probendichte eine erhöhte Festigkeit im Bereich des Einspannabschnitts gewährleistet werden kann.

Durch die Abkehr von einem einheitlichen Probenkörper mit einer einheitlichen Materialstruktur, welche mit einem erhöhten Aufwand zur Herstellung einer Werkstoffprobe verbunden ist, wird stattdessen eine Werkstoffprobe, gebildet aus verschiedenen Materialbereichen, zur Verfügung gestellt. Durch die Aufteilung in einen Testabschnitt mit den zu ermittelnden Materialeigenschaften und einem hiervon abweichenden Einspannabschnitt zur Gewährleistung einer sicheren Aufnahme in einer Werkstoffprüfeinrichtung wird der Herstellungsprozess zur Herstellung der Werkstoffprobe vereinfacht.

Die beidseitig zwischen dem Testabschnitt und den Einspannabschnitten vorhandenen Übergänge in der Werkstoffprobe zwischen dem Material mit der Probendichte und dem Material mit der Grundmaterialdichte definiert jeweils eine Verbindungszone.

Die Verbindungszone definiert eine mittige Verbindungsfläche zwischen dem Material mit der Probendichte und dem Material mit der Grundmaterialdichte.

Hinsichtlich der Anordnung des zugehörigen Einspannabschnitt an den zuvor beschriebenen Aufweitungsabschnitt ist erfindungsgemäß vorgesehen, dass der Einspannabschnitt mit dem Aufweitungsabschnitt über die Verbindungszone miteinander verbunden ist und somit der Übergang von der Probendichte auf die Grundmaterialdichte erfolgt. Die Verbindungszone definiert somit eine mittige Verbindungsfläche zwischen dem Aufweitungsabschnitt und dem Einspannabschnitt. Zur Sicherstellung, dass mit der durchgeführten Materialerprobung die Materialeigenschaften im bzw. am Testabschnitt ermittelt werden können, ist hierbei darauf zu achten, dass zur Vermeidung einer Schädigung im Bereich der Verbindungszone die Verbindungsfläche zumindest die 1,5-fache Größe relativ zum Querschnitt des Testabschnitts aufweist.

In zugleich einfacher und vorteilhafter Ausführung weist der Testabschnitt einen rechteckigen Querschnitt auf. Entsprechend weist hierbei der Testabschnitt quer zur Länge eine konstante Probenbreite und eine konstante Probenhöhe auf. Dieses stellt einerseits hinsichtlich der Herstellung die einfachste Formgebung dar als auch anderseits eine Versuchsauswertung zur Bestimmung der Materialeigenschaften erleichtert ist. Jedoch ist es gleichfalls möglich eine von einem rechteckigen Querschnitt abweichende Formgebung, beispielsweise einen elliptischen Querschnitt zu wählen.

Zur sicheren Vermeidung einer fehlerhaften Schädigung im Bereich des Aufweitungsabschnitts oder einer ungleichmäßigen Einleitung der von der Werkstoffprüfeinrichtung aufgebrachten Kräfte, ist es weiterhin vorteilhaft, wenn die Verbindungsfläche durch eine entsprechende Gestaltung größer ist als das 1,2-Fache des größten Querschnitts des Aufweitungsabschnitts. Folglich ist es naheliegend, dass die Verbindungsfläche sich nicht in einer Ebene quer zur Längserstreckung der Werkstoffprobe befinden kann.

Zur Vergrößerung der Verbindungsfläche gegenüber dem einfachen Querschnitt quer zur Längserstreckung ist es im einfachsten Fall möglich, eine gegenüber der Längserstreckung von 90° abweichende Ausrichtung einer ebenen Verbindungsfläche vorzunehmen.

Besonders vorteilhaft ist es jedoch eine symmetrische Gestalt der Verbindungsfläche zu gewährleisten. Um dennoch die Größe der Verbindungsfläche gegenüber dem einfachen Querschnitt zu vergrößern ist es vorteilhaft, eine von einer Ebene abweichende Gestalt zu wählen. Bei einer besonders vorteilhaften Gestalt der Verbindungsfläche ist der Abstand in der Mitte der Verbindungsfläche zum zugehörigen Ende der Werkstoffprobe geringer als der Abstand von zwei gegenüberliegenden Außenrändern der Verbindungsfläche zum entsprechenden Ende.

In der Umsetzung können verschiedene Geometrien für die Verbindungsfläche gewählt werden. In einfachster und vorteilhafter Weise wird die Verbindungsfläche in Form eines sich entlang der Höhe erstreckenden Satteldaches ausgeführt. D.h. die Verbindungsfläche besteht aus zwei symmetrisch gegenüber der Mitte geneigt angeordnete Flächenabschnitte und zeigt quasi wie ein Pfeil zum zugehörigen Ende der Werkstoffprobe. Alternativ ist es ebenso möglich, die Verbindungsfläche gewölbt auszuführen, sodass sich diese als Abschnitt eines Zylinders darstellt. Naheliegend sind hieraus abgeleitet weitere Geometrie für eine sich vorzugsweise in Richtung der Höhe gradlinig erstreckende Verbindungsfläche einsetzbar.

Je nach konkret eingesetztem Herstellungsverfahren sowie in Abhängigkeit von der vorgesehenen Werkstoffprüfeinrichtung kann es weiterhin vorteilhaft sein, wenn sich der Aufbereitungsabschnitt zudem ausgehend von der Probenhöhe in der Höhe aufweitet. So kann besonders vorteilhaft die Vergrößerung des Querschnitts gegenüber dem Querschnitt des Testabschnitt erzielt werden.

Hierbei kann eine besonders vorteilhafte und zuverlässige Verbindung zwischen dem Einspannabschnitt und dem Aufweitungsabschnitt zu erzielen, kann gleichfalls eine weitere Vergrößerung der Verbindungsfläche gegenüber dem einfachen Querschnitt eingesetzt werden, wobei hierzu die Verbindungsfläche beispielhaft in Form eines Walmdaches ausgeführt wird. Es ist offensichtlich, dass hierzu alternative Formgebungen zur Erzielung einer vergrößerten Verbindungsfläche einsetzbar sind.

Die erfindungsgemäße Ausführung der Werkstoffprobe eignet sich in besonderem Maße, wenn der Testabschnitt und der Aufbereitungsabschnitt eine poröse Struktur aufweisen.

Weiterhin eignet sich die erfindungsgemäße Ausführung der Werkstoffprobe in besonderem Maße, wenn die Werkstoffprobe aus einem keramischen Material und/oder aus einem hochfesten metallischen Werkstoff besteht und insofern eine Bearbeitung des Materials erschwert ist.

Eine erfindungsgemäße Werkstoffprobe kann zum einen vorteilhafter Weise zur Erprobung der Materialeigenschaften innerhalb des Testabschnitts verwendet werden. Im Falle wird in besonders vorteilhafter Weise ein symmetrischer Aufbau gewählt, sodass sich beidseitig des Testabschnitts jeweils ein Aufweitungsabschnitt anschließt, welche wiederum jeweils über eine Verbindungszone mit einem Einspannabschnitt verbunden sind. Aufgrund des vergrößerten Querschnitts im Bereich der Verbindungszone wird somit sichergestellt, dass die Schädigung und somit die Bestimmung der Materialeigenschaften im Bereich des Testabschnitts eintritt.

Wenn demgegenüber die Qualität des Übergangs von einem Materialbereich mit der Probendichte zu einem Materialbereich mit der Grundmaterialdichte ermittelt werden soll, so ist es demgegenüber vorteilhaft, wenn sich an den Testabschnitt gegenüberliegend zum Aufweitungsabschnitt ein Stababschnitt anschließt, dessen Querschnitt dem Querschnitt des Testabschnitts entspricht. Dabei verbindet eine zu erprobende Testzone den Testabschnitt mit dem Stababschnitt bei einem Übergang von dem Materialbereich mit der Probendichte zum Materialbereich mit der Grundmaterialdichte. Die Testzone definiert hierbei eine mittig angeordnete Testfläche. Im einfachsten Fall ist hierbei die Testfläche in einer Ebene quer zur Längserstreckung angeordnet und entspricht somit dem Querschnitt des Testabschnitts bzw. des Stababschnitts.

Naheliegenderweise ist es vorteilhaft, wenn sich an den Stababschnitt gegenüberliegend zum Testabschnitt ein Übergangsabschnitt anschließt, bei dem sich die Breite vergrößert. An den Übergangsabschnitt schließt sich des Weiteren nahtlos ein Einspannabschnitt an. Dabei werden der Stababschnitt, der Übergangsabschnitt und der Einspannabschnitt vorzugsweise gleichartig hinsichtlich der Materialstruktur ausgeführt.

Zur Realisierung der Werkstoffprobe stehen verschiedene Möglichkeiten zur Verfügung. Dies hängt insbesondere auch von der Frage ab, ob spezifische Materialeigenschaften von der Ausrichtung der Werkstoffprobe im Pulverbett-Herstellungsprozess abhängig sind.

Sofern eine stehende Anordnung der Werkstoffprobe, d. h. eine Ausrichtung der Längserstreckung der Werkstoffprobe in der Z-Richtung im Pulverbett-Herstellungsprozess, und hierbei die Herstellung jeweils einer einzelnen Werkstoffprobe vorgesehen ist, ist es des Weiteren besonders vorteilhaft, ein Zwischenprodukt in einem Pulverbett-Herstellungsprozess herzustellen, welches eine Werkstoffprobe zumindest einem Versteifungselement umfasst. Hierdurch kann leichter die Formgebung der Werkstoffprobe im Herstellungsprozess gewährleistet werden als auch ebenso die Gefahr einer Schädigung der Werkstoffprobe bei der Entnahme aus der Pulverbett-Herstellungseinrichtung reduziert wird.

Dabei ist das Versteifungselement beiden gegenüberliegenden Einspannabschnitten einstückig verbunden.

In diesem Falle ist es besonders vorteilhaft, wenn an gegenüberliegenden Seiten der Einspannabschnitte jeweils zumindest ein Versteifungselement angeordnet ist. Bei einer flachen Gestalt der Werkstoffprobe erfolgt hierbei die Anordnung gegenüberliegender Versteifungselemente an den schmalen Rändern der Einspannabschnitte.

Erfolgt in vorteilhafter Weise die Verbindung zwischen dem Versteifungselement und dem Einspannabschnitt an derjenigen Seite, welche nicht zum Einspannen der Werkstoffprobe in der Werkstoffprüfeinrichtung erforderlich ist, so kann bei vorteilhafter Gestaltung auf eine Nacharbeit zur Herstellung der Werkstoffprobe verzichtet werden. In einfachsten Fall wird das Versteifungselement einfach von der Werkstoffprobe abgebrochen, ohne dass es zu einer Beschädigung des Testabschnitts oder der Einspannabschnitte an den zur Aufnahme erforderlichen Flächen kommt.

Hierzu wird in besonders vorteilhafter Weise das Versteifungselement über einen möglichst kleinen Querschnitt mit dem jeweiligen Einspannabschnitt verbunden, welcher hinreichend ist, um die versteifende Wirkung zu erzielen. Hierbei wird davon ausgegangen, dass bei Herstellung von Werkstoffprobe analog genormter Zugproben der jeweilige Querschnitt zwischen dem Versteifungselement und dem Einspannabschnitt kleiner als 20 mm² ist. Besonders vorteilhaft ist es, wenn der verbindende Querschnitt höchstens 10 mm² beträgt. Gleichfalls ist es vorteilhaft, wenn eine Verbindungsbreite der Verbindung zwischen dem Versteifungselement und dem Einspannabschnitt höchstens 1 mm beträgt.

Das Versteifungselement kann unterschiedlich gestaltet werden. Um jedoch den Herstellungsaufwand für dieses Versteifungselement gering zu halten und dennoch eine vorteilhafte Versteifungswirkung und Schutz für die Werkstoffprobe zu erzielen ist es vorteilhaft, wenn das Versteifungselement einen sich ausgehend von der Verbindung mit der Werkstoffprobe in der Breite erstreckenden flachen ersten Abschnitt und weiterhin einen sich ausgehend vom ersten Abschnitt in der Höhe erstreckenden flachen zweiten Abschnitt aufweist.

In Abhängigkeit davon, die Werkstoffprobe unmittelbar im vorgesehenen Herstellungsprozess hergestellt werden soll oder durch Zuschneiden aus einem größeren Bauteil gewonnen wird, stehen zwei vorteilhafte Herstellungsverfahren zur Verfügung.

Zunächst einmal bedarf es in jedem Fall eines Modells der Werkstoffprobe.

Zur Herstellung eines Zwischenproduktes, wie zuvor beschrieben, werden beidseitig am Modell der Werkstoffprobe jeweils Versteifungselemente angeordnet und somit ein Modell des Zwischenproduktes erzeugt.

Das Modells des Zwischenprodukts wird mehrfach auf einer Grundebene angeordnet, von der ausgehend nachfolgend der Herstellungsprozess erfolgt. Hierbei erstreckt sich die Grundebene in einer X-Richtung und einer Y-Richtung und definiert eine hierzu senkrechte Z-Richtung. Vorteilhafte werden dabei die Modelle der Zwischenprodukte derartig angeordnet, dass die Längserstreckung der Werkstoffprobe in der Z-Richtung ausgerichtet sind.

Nunmehr erfolgt die Herstellung der Zwischenprodukte in einem Pulverbett-Herstellungsprozess. Nach dem Entfernen von überschüssigem Pulver aus der Herstellungseinrichtung werden die Zwischenprodukte entnommen.

Abschließend ist nur noch die Entfernung der Versteifungselement erforderlich, wozu diese lediglich von den Einspannabschnitten abgetrennt werden.

Alternativ ist es jedoch ebenso möglich, die Werkstoffprobe ohne Versteifungselemente herzustellen. Um dennoch die Geometrie gewährleisten zu können und zugleich eine Beschädigung, beispielsweise bei einer Entnahme, zu verhindern, wird ausgehend vom Modell der Werkstoffprobe zunächst ein Modell einer vergrößerten Werkstoffprobe erzeugt. Hierzu wird in einfacher Weise die Höhe der Werkstoffprobe um ein Vielfaches vergrößert. Beispielsweise kann vorgesehene sein, dass die Höhe der vergrößerten Werkstoffprobe 5-mal so groß ist, wie die Probenhöhe.

Analog erfolgt die mehrfache Anordnung des Models der vergrößerten Werkstoffprobe auf der Grundebene (wie zuvor beschrieben). Dabei ist erfindungsgemäß vorgesehen, dass sich die Höhe in der Z-Richtung ausgerichtet ist.

Nunmehr erfolgt die Herstellung einer vergrößerten Werkstoffprobe in einem Pulverbett-Herstellungsprozess.

Nach der Entfernung überschüssigen Pulvers erfolgt gleichfalls die Entnahme aus der Herstellungseinrichtung.

Im Gegensatz zum zuvor beschriebenen Verfahren ist es jedoch erforderlich, die vergrößerte Werkstoffprobe derart zu bearbeiten, dass man die Werkstoffprobe mit der Probenhöhe erhält. Hierzu wird in besonders vorteilhafter Weise die vergrößerte Werkstoffprobe in Schichten zerschnitten. Hierzu kann vorteilhaft das Verfahren des Drahterodierens eingesetzt werden, so dass keine weiteren Bearbeitungsschritte nachfolgend notwendig sind.

In den nachfolgenden Figuren werden beispielhafte Ausführungsformen für eine erfindungsgemäße Werkstoffprobe sowie ein Zwischenprodukt dargestellt. Es zeigen:
- Fig. 1: ein erstes Ausführungsbeispiel einer erfindungsgemäßen Werkstoffprobe in perspektivischer Ansicht;
- Fig. 2: die Werkstoffprobe aus Fig. 1 in einer Seitenansicht;
- Fig. 3: ein zweites Ausführungsbeispiel einer erfindungsgemäßen Werkstoffprobe in perspektivischer Ansicht;
- Fig. 4: die Werkstoffprobe aus Fig. 4 in einer Seitenansicht;
- Fig. 5: ein Ausführungsbeispiel für ein Zwischenprodukt in perspektivischer Ansicht;
- Fig. 6: das Zwischenprodukt aus Fig. 5 in der Draufsicht;
- Fig. 7: ein alternatives Zwischenprodukt zur Herstellung der Werkstoffprobe;
- Fig. 8-10: beispielhafte Formgebungen für Verbindungsfläche.

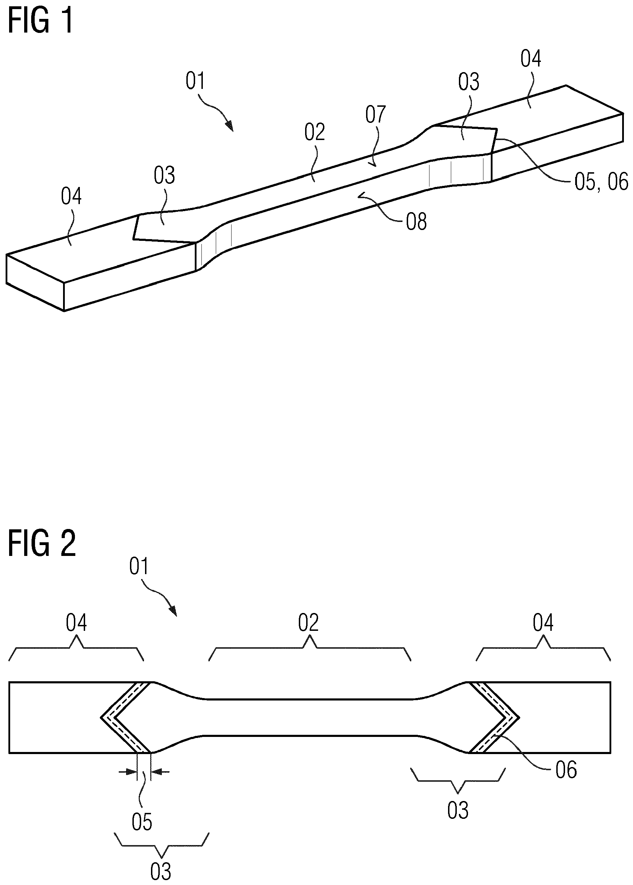

In der Fig. 1 ein erstes symmetrisches Ausführungsbeispiel für eine erfindungsgemäße Werkstoffprobe 01 in perspektivischer Ansicht skizziert. Hierzu zeigt die Fig. 2 eine Seitenansicht auf die Werkstoffprobe 01. Zu erkennen ist zunächst einmal der Testabschnitt 02 der Mitte der Werkstoffprobe 01 mit einem rechteckigen Querschnitt. In der Ansicht in Fig. 2 zu erkennen, dass der Testabschnitt 02 quer zur Längserstreckung der Werkstoffprobe 01 eine konstante Probenbreite aufweist. Weiterhin weist der Testabschnitt 02 eine konstante Probenhöhe, in diesem Fall als Stärke der Werkstoffprobe 01 auf.

Der Testabschnitt 02 weist ein Gefüge mit einer Probendichte als Verhältnis des Gewichts relativ zum Volumen des Testabschnitt 02 auf. Besonders vorteilhaft die Verwendung der erfindungsgemäßen Werkstoffprobe, wenn die Probendichte geringer ist als es der Dichte des verwendeten Materials entspricht. Beispielsweise kann der Testabschnitt 02 porös ausgeführt sein.

Beidseitig an den Testabschnitt 02 schließt sich jeweils ein Aufweitungsabschnitt 03 nahtlos an. Diese 03 weisen hierbei zunächst das gleiche Gefüge und Material wie der Testabschnitt 02 auf. Beim Aufweitungsabschnitt 03 vergrößert sich die Breite von der Probenbreite auf die Breite der Werkstoffprobe 01.

An beiden Enden der Werkstoffprobe 01 befinden sich jeweils Einspannabschnitte 04, welche 04 die Befestigung der Werkstoffprobe 01 in entsprechender Prüfeinrichtung ermöglichen. Zur Gewährleistung einer sicheren Einspannung in der Prüfeinrichtung ist es erforderlich, dass die Einspannabschnitte 04 eine gegenüber der Probendichte vergrößerte Grundmaterialdichte aufweisen. Hierdurch soll sichergestellt werden, dass in der Test-Durchführung keine Schädigung im Bereich der Einspannabschnitte 04 auftritt und somit zuverlässig die Erprobung des Testabschnitts 02 durchgeführt werden kann.

Die unterschiedliche Materialstruktur zwischen den Aufweitungsabschnitten 03 und den Einspannabschnitt 04 führen zu einer mehr oder weniger breiten Verbindungszone 05 als Übergang von der Materialstruktur des Aufweitungsabschnitts 03 mit der Probendichte auf die Materialstruktur des Einspannabschnitts 04 mit der Grundmaterialdichte. Die Mitte der Verbindungszone 05 stellt hierbei die Verbindungsfläche 06 dar. Um eine Schädigung im Bereich der Verbindungszone 05 in der Test-Durchführung auszuschließen ist es erforderlich, dass die Verbindungsfläche 06 hinreichend größer als der Querschnitt des Testabschnitt 02 ist. Hierzu ist in diesem Ausführungsbeispiel vorgesehen, dass die Verbindungsfläche 06 von zwei zueinander abgewinkelten Teilflächen gebildet wird, wobei die Mitte der Verbindungsfläche 06 pfeilförmig in Richtung des jeweiligen Endes der Werkstoffprobe 01 zeigt. Hierdurch wird erreicht, dass die Verbindungsfläche ungefähr doppelt so groß wie der Querschnitt des Testabschnitt 02 ist.

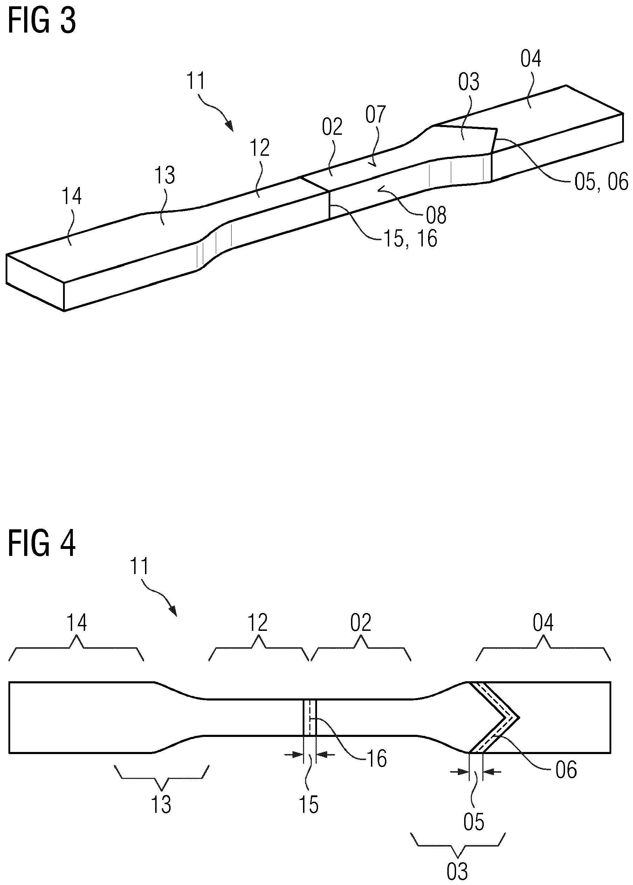

In der Fig. 3 wird in Verbindung mit der Fig. 4 eine alternative Ausführung einer Werkstoffprobe 11 skizziert, mittels derer insbesondere die Qualität der Verbindung zwischen dem Testabschnitt 02 mit der Probendichte und einem Bereich in der Grundmaterialdichte erprobt werden kann. Hierzu schließt sich an einen Testabschnitt 02, gleichfalls mit konstantem Querschnitt, ein Stababschnitt 12 mit der übereinstimmenden Probenbreite und Probehöhe an, welcher 12 demgegenüber jedoch die Grundmaterialdichte aufweist. Dieses führt zu einer Testzone 15 als Übergang vom Materialbereich des Testabschnitts 02 mit der Probendichte zum Materialbereich des Stababschnitts 12 mit der Grundmaterialdichte. Somit kann mittels dieser Anordnung die Qualität der Testzone 15 ermittelt werden. Mittig zur Testzone 15 ist analog eine Testfläche 16 definiert.

Zur Aufnahme dieser zweiten Ausführungsform der Werkstoffprobe 11 in einer Werkstoffprüfeinrichtung weist diese ebenso beidseitig einen Einspannabschnitt 04, 14 auf, wobei sich an den Stababschnitt 12 ein Übergangsabschnitt 13 und daran der Einspannabschnitt 14 anschließt. Hierbei weisen alle drei Bereiche, d.h. der Stababschnitt 12, der Übergangsabschnitt 13 und der Einspannabschnitt 14 die gleichen Materialeigenschaften mit der Grundmaterialdichte auf.

Wie aus der Fig. 4 ersichtlich ist, ist die Größe der Verbindungsfläche 06 deutlich größer als die Größe der Testfläche 16, welche 16 in diesem Fall dem Querschnitt des Testabschnitts 02 bzw. des Stababschnitts 12 entspricht. Somit ist sichergestellt, dass mittels einer Erprobung die Festigkeit der Testzone 15 ermittelt werden kann, ohne dass die Verbindungszone 05 hierauf einen Einfluss hat.

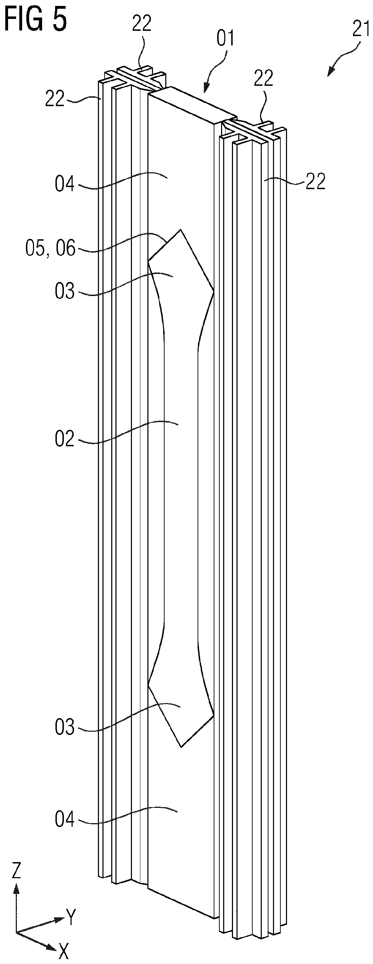

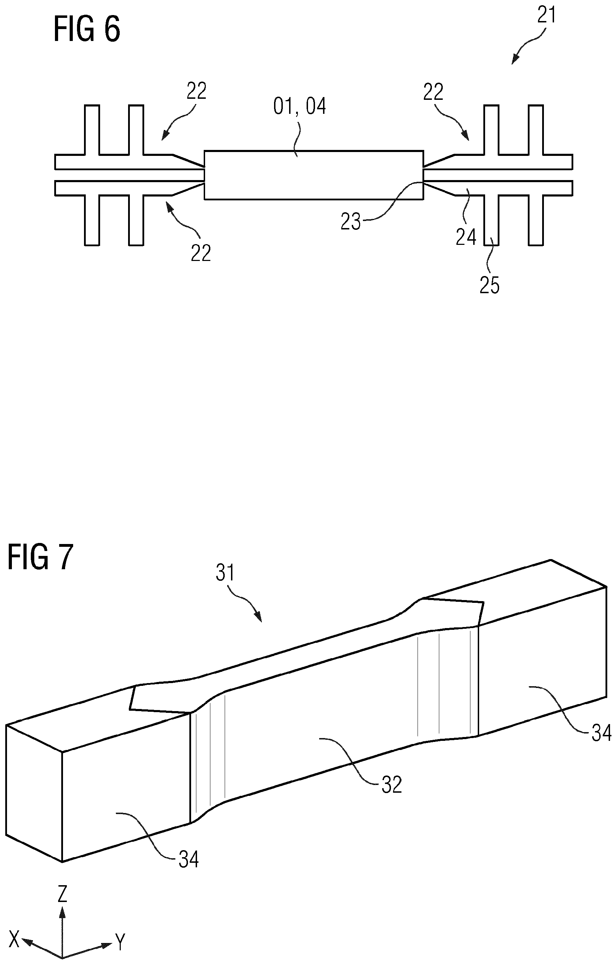

In der nachfolgenden Fig. 5 wird nunmehr ein Zwischenprodukt 21 in perspektivischer Darstellung gezeigt, welches 21 mittels eines Pulverbett-Herstellungsprozesses hergestellt werden kann. Hierzu zeigt die Fig. 6 eine Draufsicht auf das Zwischenprodukt 21. Wie zu erkennen ist, umfasst in diesem Ausführungsbeispiel das Zwischenprodukt 21 eine Werkstoffprobe 01, wie zuvor beschrieben, sowie beidseitig über die Breite gegenüberliegend angeordnete Versteifungselemente 22. In diesem Ausführungsbeispiel ist vorgesehen, dass auf jeder Seite jeweils zwei Versteifungselemente 22 angeordnet sind, welche 22 jeweils einen sich entlang der Breite erstreckenden ersten Abschnitt 24 und zwei sich in der Höhe ausgehend vom ersten Abschnitt 24 erstreckende zweite Abschnitte 25 aufweisen. Dabei sind die ersten Abschnitte 24 über eine Versteifungsverbindung 23 mit den beiden Endabschnitten 04 verbunden. Dabei weist die Versteifungsverbindung 23 eine geringe Stärke auf, sodass im einfachsten Fall ein Abbrechen des jeweiligen Versteifungselement 22 von der Werkstoffprobe 01 möglich wird. Sofern nachfolgend ein Grat an den schmalen Seiten der Einspannabschnitt 04 verbleibt, so ist dies unerheblich für die Einspannung in der Werkstoffprüfeinrichtung und bedarf somit keiner Nacharbeit.

Zur Herstellung dieser Ausführungsform des Zwischenproduktes 21 ist insbesondere vorgesehen, die Längserstreckung der Werkstoffprobe 01 in der Z-Richtung auszurichten. Im Pulverbett-Herstellungsprozess ist es dabei möglich, eine Mehrzahl derartiger Zwischenprodukte 21 nebeneinander stehend angeordnet zugleich herzustellen.

In der Fig. 7 ist eine alternative Ausführung eines Zwischenproduktes 31 in perspektivischer Ansicht skizziert. Wie im Vergleich mit der Werkstoffprobe 01 aus Fig. 1 ersichtlich ist, weist das Zwischenprodukt 31 eine gegenüber der Werkstoffprobe 01 um ein Vielfaches vergrößerte Höhe auf. Ansonsten ist das Zwischenprodukt 31 übereinstimmend mit der Werkstoffprobe 01 gebildet mit einem mittigen Testabschnitt 32 und den Einspannabschnitten 34 an den gegenüberliegenden Enden des Zwischenproduktes 31.

Zur Herstellung diese Ausführungsform des Zwischenproduktes 31 ist es vorteilhaft, wenn das Zwischenprodukt 31 liegend auf einer Grundebene angeordnet ist. Dabei ist die Höhe des Zwischenproduktes 31 in der Z-Richtung senkrecht zur Grundebene ausgerichtet.

Diese Gestalt des Zwischenproduktes 31 machte die Anordnung von Versteifungselementen entbehrlich, da bereits aufgrund der vergrößerten Höhe die hinreichende Eigensteifigkeit gegeben ist, ohne dass es zu einer besonderen Schädigung bei der Entnahme aus der Pulverbett-Herstellungseinrichtung kommt.

Um nunmehr eine Werkstoffprobe 01 aus dem Zwischenprodukt 31 zu erhalten wird in vorteilhafter Weise das Zwischenprodukt 31 in mehreren Schichten parallel zur Grundebene zerteilt. Hierzu kann in vorteilhafter Weise das Verfahren des Drahterodierens eingesetzt werden.

Sofern die Oberfläche des im Pulverbett-Herstellungsprozesses hergestellten Zwischenproduktes 31 im Bereich des Testabschnitts 32 prozessbedingt abweichend ist von dem Gefüge im Testabschnitt 02, so führt das Trennen in Schichten mittels des Drahterodierens vorteilhaft zur Entfernung dieser Oberfläche, sodass die Ergebnisse aus einer Erprobung der Materialeigenschaften des Testabschnitts 02 aussagekräftiger sind.

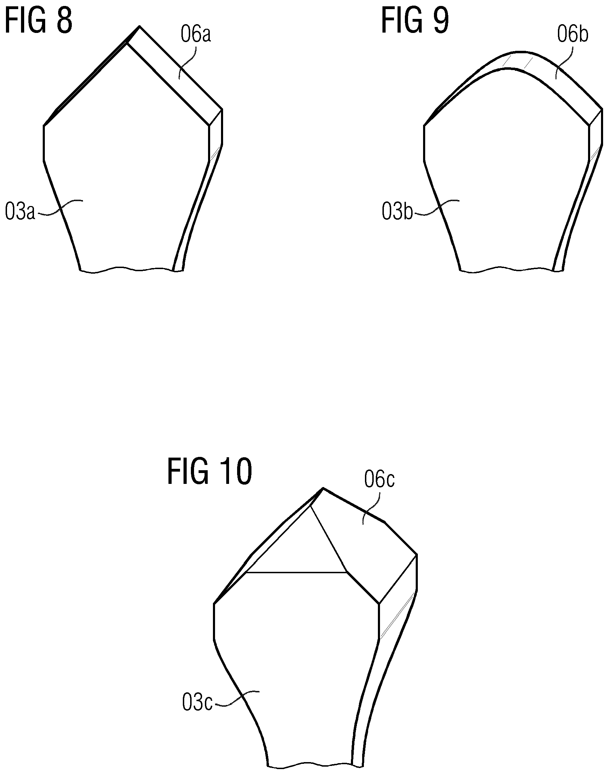

Abschließend zeigen die Figuren 8 bis 10 verschiedene alternative Gestaltungsmöglichkeiten für eine Verbindungsfläche 06 als Übergang vom Aufweitungsabschnitt 03 zum Einspannabschnitt 04. So ist es im einfachen Ausführungsfall möglich, die Verbindungsfläche 06a in Form eines Satteldaches auszuführen - siehe Fig. 8 sowie vorherige Ausführungsformen einer Werkstoffprobe 01, 11. Gleichfalls ist es möglich, die Verbindungsfläche 06b gewölbt auszuführen - siehe Fig. 9. sofern eine Aufweitung vom Testabschnitt 02 zum Einspannabschnitt 04 nicht nur in der Breite sondern auch in der Höhe im Bereich des Aufweitungsabschnitt 03c erfolgt, so kann die Verbindungsfläche 06c beispielsweise in Form eines Walmdaches ausgeführt sein - siehe Fig. 10.

## Patentansprüche

1. Werkstoffprobe (01, 11) zur Verwendung in einer Werkstoffprüfeinrichtung umfassend
- einen Testabschnitt (02), welcher (02) aus einem zu prüfenden Material mit einer Probendichte besteht und eine Probenbreite und eine Probenhöhe aufweist,
- zumindest einen Aufweitungsabschnitt (03), welcher (03) an dem Testabschnitt (02) anschließt und eine sich vergrößernde Breite aufweist,
- einen das Ende der Werkstoffprobe (01, 11) bildenden Einspannabschnitt (04), welcher (04) eine gegenüber der Probendichte vergrößerte Grundmaterialdichte besitzt mit dem Aufweitungsabschnitt (03) verbunden ist,
wobei eine Verbindungszone (05) als Übergang von der Probendichte zur Grundmaterialdichte vorhanden ist und hierzu eine mittige Verbindungsfläche (06) definiert ist,
**dadurch gekennzeichnet,**
**dass** der Aufweitungsabschnitt (03) die Probendichte aufweist und die mittige Verbindungsfläche (06) zwischen dem Einspannabschnitt (04) und dem Aufweitungsabschnitt (03) angeordnet ist und dabei größer als das 1,5-Fache des Querschnitts des Testabschnitts (02) ist.

2. Werkstoffprobe (01, 11) nach Anspruch 1,
wobei die Verbindungsfläche (06) größer ist als das 1,2-Fache des größten Querschnitts des Aufweitungsabschnitts (03).

3. Werkstoffprobe (01, 11) nach Anspruch 1 oder 2,
wobei der Abstand der Verbindungsfläche (06) zum zugehörigen Ende der Werkstoffprobe (01, 11) in dessen Mitte geringer ist als an zwei seiner gegenüberliegenden Außenränder.

4. Werkstoffprobe (01, 11) nach einer der Ansprüche 1 bis 3, wobei der Aufweitungsabschnitt (03) weiterhin eine sich vergrößernde Höhe aufweist.

5. Werkstoffprobe (01, 11) nach Anspruch 3 oder 4,
wobei die Verbindungsfläche (06) in Form eines sich entlang der Höhe erstreckenden Satteldaches oder dergleichen ausgeführt ist; und/oder
wobei die Verbindungsfläche (06) in Form eines Walmdaches oder dergleichen ausgeführt ist.

6. Werkstoffprobe (01, 11) nach einer der Ansprüche 1 bis 5, wobei der Testabschnitt (02) und der Aufweitungsabschnitt (03) eine poröse Struktur aufweisen.

7. Werkstoffprobe (01,11) nach einer der Ansprüche 1 bis 6, bestehend aus einem metallischen oder/oder keramischen Material.

8. Werkstoffprobe (01) nach einer der Ansprüche 1 bis 7,
mit einem symmetrischen Aufbau beidseitig des Testabschnitts (02) .

9. Werkstoffprobe (11) nach einer der Ansprüche 1 bis 7, weiterhin umfassend
- einen Stababschnitt (12), welcher (12) die Grundmaterialdichte und einen zum Testabschnitt übereinstimmenden Querschnitt aufweist,
- einen Übergangsabschnitt (13), welcher (13) sich an den Stababschnitt (12) anschließt und zumindest eine sich vergrößernde Breite aufweist,
- einen an den Übergangsabschnitt (13) anschließenden Einspannabschnitt (14),
wobei der Testabschnitt (02) über eine Testzone (15) mit dem Stababschnitt (12) verbunden ist, wobei die Verbindungsfläche (06) größer ist als das 1,5-Fache einer mittigen Testfläche (16) der Testzone (15).

10. Zwischenprodukt (21) umfassend eine Werkstoffprobe (01, 11) nach einer der vorhergehenden Ansprüche und zumindest ein Versteifungselement (22), welches (22) mit beiden Einspannabschnitten (04, 14) einstückig verbunden ist.

11. Zwischenprodukt (21) nach Anspruch 10,
wobei an den über die Breite gegenüberliegenden Seiten der Einspannabschnitte (04, 14) jeweils zumindest ein Versteifungselement (22) angeordnet ist.

12. Zwischenprodukt (21) nach Anspruch 10 oder 11,
wobei das Versteifungselement (22) jeweils über eine Versteifungsverbindung (23) mit dem jeweiligen Einspannabschnitt (04, 14) verbunden ist,
- welche (23) ein Abbrechen des Versteifungselements (22) ohne Beschädigung der Werkstoffprobe (01, 11) zulässt; und/oder
- dessen (23) Querschnitt höchstens 20 mm2, insbesondere höchstens 10 mm2, beträgt; und/oder
- welche (23) eine Verbindungsbreite quer zur Länge der Werkstoffprobe von höchstens 1 mm, aufweist.

13. Zwischenprodukt (21) nach einer der Ansprüche 10 bis 12, wobei das Versteifungselement (22) zumindest einen sich in der Breite erstreckenden flachen ersten Abschnitt (24) und zumindest einen sich vom ersten Abschnitt (24) in der Höhe erstreckenden flachen zweiten Abschnitt (25) aufweist.

14. Verfahren zur Herstellung einer Werkstoffprobe (01, 11) nach einer der Ansprüche 1 bis 9, mit den Schritten:
- Bereitstellung eines Modells einer Werkstoffprobe (01, 11) nach einer der Ansprüche 1 bis 9;
- Erstellung eines Modells eines Zwischenproduktes (21) nach einer der Ansprüche 10 bis 13 durch Ergänzung von Versteifungselementen (22) beidseitig am Modell der Werkstoffprobe (01,11);
- Anordnung mehrerer Modelle von Zwischenprodukten (21) auf einer Grundebene, welche sich in einer X-Richtung und einer Y-Richtung erstreckt und eine Z-Richtung definiert, wobei insbesondere die Längserstreckung der Zwischenprodukte (21) in der Z-Richtung ausgerichtet ist;
- Herstellung der Zwischenprodukte (21) in einem Pulverbett-Herstellungsprozess;
- Entnahme der Zwischenprodukte (21) und Entfernung überschüssigen Pulvers;
- Entfernung der Versteifungselemente (22), insbesondere durch Abbrechen.

15. Verfahren zur Herstellung einer Werkstoffprobe (01, 11) nach einer der Ansprüche 1 bis 9, mit den Schritten:
- Bereitstellung eines Modells der Werkstoffprobe (01, 11);
- Vergrößerung der Höhe des Modells der Werkstoffprobe (01, 11) um ein Vielfaches, insbesondere um zumindest das 5-Fache;
- Anordnung des Modells der vergrößerten Werkstoffprobe (31) auf einer Grundebene, welche sich in einer X-Richtung und einer Y-Richtung erstreckt und eine Z-Richtung definiert, wobei die Höhe in der Z-Richtung ausgerichtet ist;
- Herstellung der vergrößerten Werkstoffprobe (31) in einem Pulverbett-Herstellungsprozess;
- Entnahme der vergrößerten Werkstoffprobe (31) und Entfernung überschüssigen Pulvers;
- Zerschneiden der vergrößerten Werkstoffprobe (31), insbesondere durch Drahterodieren, in Schichten bei Erzeugung zumindest einer Werkstoffprobe (01, 11).

## Claims

1. Material sample (01, 11) for use in a material test device, comprising
- a test portion (02), which (02) consists of a material to be tested having a test density and has a sample width and a sample height,
- at least one widening portion (03), which (03) adjoins the test portion (02) and has an increasing width,
- a clamping portion (04) forming the end of the material sample (01, 11), which (04) has an increased base material density with respect to the sample density and is connected to the widening portion (03),
wherein a connecting zone (05) is present as a transition from the sample density to the base material density and for this purpose a central connecting surface (06) is defined,
**characterized**
**in that** the widening portion (03) has the sample density and the central connecting surface (06) is arranged between the clamping portion (04) and the widening portion (03) and is greater than 1.5 times the cross section of the test portion (02).

2. Material sample (01, 11) according to Claim 1,
wherein the connecting surface (06) is greater than 1.2 times the largest cross section of the widening portion (03) .

3. Material sample (01, 11) according to Claim 1 or 2,
wherein the distance between the connecting surface (06) and the associated end of the material sample (01, 11) is smaller in its centre than at two of its mutually opposite outer edges.

4. Material sample (01, 11) according to one of Claims 1 to 3,
wherein the widening portion (03) also has an increasing height.

5. Material sample (01, 11) according to Claim 3 or 4,
wherein the connecting surface (06) is configured in the form of a saddle roof or the like extending along the height; and/or
wherein the connecting surface (06) is configured in the form of a hipped roof or the like.

6. Material sample (01, 11) according to one of Claims 1 to 5,
wherein the test portion (02) and the widening portion (03) have a porous structure.

7. Material sample (01, 11) according to one of Claims 1 to 6,
consisting of a metallic and/or ceramic material.

8. Material sample (01) according to one of Claims 1 to 7, having a symmetrical structure on both sides of the test portion (02).

9. Material sample (11) according to one of Claims 1 to 7, further comprising
- a bar portion (12), which (12) has the base material density and a cross section corresponding to the test portion,
- a transition portion (13), which (13) adjoins the bar portion (12) and has at least an increasing width,
- a clamping portion (14) adjoining the transition portion (13),
wherein the test portion (02) is connected to the bar portion (12) via a test zone (15), wherein the connecting surface (06) is greater than 1.5 times a central test surface (16) of the test zone (15).

10. Intermediate product (21) comprising a material sample (01, 11) according to one of the preceding claims and at least one stiffening element (22), which (22) is connected in one piece to both clamping portions (04, 14).

11. Intermediate product (21) according to Claim 10,
wherein in each case at least one stiffening element (22) is arranged on the sides of the clamping portions (04, 14) situated opposite one another across the width.

12. Intermediate product (21) according to Claim 10 or 11,
wherein the stiffening element (22) is in each case connected to the respective clamping portion (04, 14) via a stiffening connection (23),
- which (23) allows the stiffening element (22) to be broken off without damage to the material sample (01, 11); and/or
- its (23) cross section is at most 20 mm², in particular at most 10 mm²; and/or
- which (23) has a connecting width transversely with respect to the length of the material sample of at most 1 mm.

13. Intermediate product (21) according to one of Claims 10 to 12,
wherein the stiffening element (22) has at least one flat first portion (24) extending width-wise and has at least one flat second portion (25) extending height-wise from the first portion (24).

14. Method for producing a material sample (01, 11) according to one of Claims 1 to 9, comprising the following steps:
- providing a model of a material sample (01, 11) according to one of Claims 1 to 9;
- creating a model of an intermediate product (21) according to one of Claims 10 to 13 by adding stiffening elements (22) on both sides of the model of the material sample (01, 11);
- arranging a plurality of models of intermediate products (21) on a base plane which extends in an X direction and a Y direction and defines a Z direction, wherein in particular the longitudinal extent of the intermediate products (21) is oriented in the Z direction;
- producing the intermediate products (21) in a powder bed production process;
- removing the intermediate products (21) and removing excess powder;
- removing the stiffening elements (22), in particular by breaking them off.

15. Method for producing a material sample (01, 11) according to one of Claims 1 to 9, comprising the following steps:
- providing a model of the material sample (01, 11);
- enlarging the height of the model of the material sample (01, 11) by a multiple, in particular by at least 5 times;
- arranging the model of the enlarged material sample (31) on a base plane which extends in an X direction and a Y direction and defines a Z direction, wherein the height is oriented in the Z direction;
- producing the enlarged material sample (31) in a powder bed production process;
- removing the enlarged material sample (31) and removing excess powder;
- cutting the enlarged material sample (31), in particular by wire erosion, into layers during production of at least one material sample (01, 11).

## Revendications

1. Echantillon (01, 11) de matériau à utiliser dans un dispositif de contrôle de matériau comprenant
- une partie (02) de test, qui (02) est en une matière à contrôler ayant une masse volumique d'échantillon et qui a une largeur d'échantillon et une hauteur d'échantillon,
- au moins une partie (03) d'élargissement, qui (03) se raccorde à la partie (02) de test et a une largeur s'agrandissant,
- une partie (04) d'encastrement, qui (04) forme l'extrémité de l'échantillon (01, 11) de matériau, qui possède une masse volumique de matière de base agrandie par rapport à la masse volumique de l'échantillon et qui est reliée à la partie (03) d'agrandissement,
dans lequel il y a une zone (05) de liaison comme transition de la masse volumique de l'échantillon à la masse volumique de la matière de base et il est défini à cet effet une surface (06) médiane de liaison,
**caractérisé**
**en ce que** la partie (03) d'élargissement a la masse volumique de l'échantillon et la surface (06) médiane de liaison est disposée entre la partie (04) d'encastrement et la partie (03) d'élargissement et est ainsi plus grande que 1,5 fois la section transversale de la partie (02) de test.

2. Echantillon (01, 11) de matériau suivant la revendication 1,
dans lequel la surface (06) de liaison est plus grande que 1,2 fois la section transversale la plus grande de la partie (03) d'élargissement.

3. Echantillon (01, 11) de matériau suivant la revendication 1 ou 2,
dans lequel la distance de la surface (06) de liaison a l'extrémité, qui lui appartient, de l'échantillon (01, 11) de matériau est dans son milieu plus petite que sur deux de ses bords extérieurs opposés.

4. Echantillon (01, 11) de matériau suivant l'une des revendications 1 à 3,
dans lequel la partie (03) d'élargissement a en outre une hauteur, qui s'agrandit.

5. Echantillon (01, 11) de matériau suivant la revendication 3 ou 4,
dans lequel la surface (06) de liaison est réalisée sous la forme d'un toit à double pente ou analogue, qui s'agrandit suivant la hauteur ; et/ou
dans lequel la surface (06) de liaison est réalisée sous la forme d'un toit à croupe ou analogue.

6. Echantillon (01, 11) de matériau suivant l'une des revendications 1 à 5,
dans lequel la partie (02) de test et la partie (03) d'élargissement ont une structure poreuse.

7. Echantillon (01, 11) de matériau suivant l'une des revendications 1 à 6,
en une matière métallique ou/ou céramique.

8. Echantillon (01) de matériau suivant l'une des revendications 1 à 7,
comprenant une structure symétrique de part et d'autre de la partie (02) de test.

9. Echantillon (11) de matériau suivant l'une des revendications 1 à 7,
comprenant en outre
- une partie (12) de barreau, qui (12) a la masse volumique de la matière de base et une section transversale coïncidant avec la partie de test,
- une partie (13) de transition, qui (13) se raccorde à la partie (12) de barreau et qui a au moins une largeur s'agrandissant,
- une partie (14) d'encastrement se raccordant à la partie (13) de transition,
dans lequel la partie (02) de test est, par une zone (15) de test, reliée à la partie (12) de barreau, dans lequel la surface (06) de liaison est plus grande que 1,5 fois une surface (16) médiane de test de la zone (15) de test.

10. Produit (21) intermédiaire comprenant un échantillon (01, 11) de matériau suivant l'une des revendications précédentes, et au moins un élément (22) de raidissement, qui (22) est relié d'une seule pièce au deux parties (04, 14) d'encastrement.

11. Produit (21) intermédiaire suivant la revendication 10, dans lequel, sur les côtés opposés sur la largeur des parties (04, 14) d'encastrement est disposé respectivement au moins un élément (22) de raidissement.

12. Produit (21) intermédiaire suivant la revendication 10 ou 11,
dans lequel l'élément (22) de raidissement est relié à la partie (04, 14) d'encastrement respectivement par une liaison (23) de raidissement,
- laquelle (23) autorise une rupture de l'élément (22) de raidissement sans endommager l'échantillon (01, 11) de matériau ; et/ou
- dont (23) la section transversale s'élève au plus à 20 mm², en particulier au plus à 10 mm² ; et/ou
- qui (23) a une largeur de liaison transversalement à la longueur de l'échantillon de matériau de 1 mm au plus.

13. Produit (21) intermédiaire suivant l'une des revendications 10 à 12,
dans lequel l'élément (22) de raidissement a au moins une première partie (24) plate s'étendant dans la largeur et au moins une deuxième partie (25) plate s'étendant en hauteur à partir de la première partie (24).

14. Procédé de fabrication d'un échantillon (01, 11) de matériau suivant l'une des revendications 1 à 9, comprenant les stades :
- on se procure un modèle d'un échantillon (01, 11) de matériau suivant l'une des revendications 1 à 9 ;
- on établit un modèle d'un produit (21) intermédiaire suivant l'une des revendications 10 à 13, en complétant par des éléments (22) de raidissement de part et d'autre du modèle de l'échantillon (01, 11) de matériau ;
- on met plusieurs modèles de produits (21) intermédiaires sur un plan de base, qui s'étend dans une direction X et une direction Y et qui définit une direction Z, dans lequel, en particulier l'étendue longitudinale du produit (21) intermédiaire est dirigée dans la direction Z ;
- on fabrique les produits (21) intermédiaires dans un processus de fabrication à lit de poudre ;
- on prélève les produits (21) intermédiaires et on élimine de la poudre en excès ;
- on élimine les éléments (22) de raidissement, en particulier par rupture.

15. Procédé de fabrication d'un échantillon (01, 11) de matériau suivant l'une des revendications 1 à 9, comprenant les stades :
- on se procure un modèle de l'échantillon (01, 11) de matériau ;
- on agrandit la hauteur du modèle de l'échantillon (01, 11) de matériau de plusieurs fois, en particulier d'au moins 5 fois ;
- on met le modèle de l'échantillon (31) de matériau agrandi sur un plan de base, qui s'étend dans une direction X et une direction Y et qui définit une direction Z, dans lequel la hauteur est dirigée dans la direction Z ;
- on produit l'échantillon (31) de matériau agrandi dans un processus de fabrication à lit de poudre ;
- on prélève l'échantillon (31) de matériau agrandi et on élimine de la poudre en excès ;
- on découpe l'échantillon (31) de matériau agrandi, en particulier par électroérosion par fil en couches, lors de la production d'au moins un échantillon (01, 11) de matériau.
